**Europäisches Patentamt**

**European Patent Office**

**Office européen des brevets**

(19)

(11) Numéro de publication : **0 601 081 B1**

# (12) FASCICULE DE BREVET EUROPEEN

(45) Date de publication du fascicule du brevet :
**19.07.95 Bulletin 95/29**

(51) Int. Cl.⁶ : **G01L 1/10,** G01L 11/00,
G01D 5/26

(21) Numéro de dépôt : **92919104.7**

(22) Date de dépôt : **19.08.92**

(86) Numéro de dépôt international :
**PCT/FR92/00806**

(87) Numéro de publication internationale :
**WO 93/04347 04.03.93 Gazette 93/06**

(54) **Microcapteur à poutre vibrante compensé en température.**

(30) Priorité : **23.08.91 FR 9110623**

(43) Date de publication de la demande :
**15.06.94 Bulletin 94/24**

(45) Mention de la délivrance du brevet :
**19.07.95 Bulletin 95/29**

(84) Etats contractants désignés :
**DE GB**

(56) Documents cités :
**EP-A- 0 266 974**
**EP-A- 0 428 263**
**GB-A- 2 198 531**

(73) Titulaire : **SOLARTRON GROUP LIMITED
Victoria Road
Farnborough, Hampshire GU14 7PW (US)**

(72) Inventeur : **LARGEAU, Didier
24, rue des Moines
F-75017 Paris (FR)**

(74) Mandataire : **Smith, Philip Antony et al
REDDIE & GROSE
16 Theobalds Road
London WC1X 8PL (GB)**

## Description

La présente invention a pour objet un microcapteur à poutre vibrante compensé en température. Elle s'applique notamment aux mesures de pression sur une grande gamme de température pouvant aller de quelques dizaines de degrés Celsius en dessous de 0°C jusqu'à quelques centaines de degrés celsius au dessus de 0°C.

Les microcapteurs à poutre vibrante sont connus ; on en trouve des descriptions dans les documents GB 2 185 106 et GB 2 194 049.

Ce type de capteur appliqué à la mesure de pression est réalisé en matériau semiconducteur, du silicium par exemple, et possède une poutre vibrante solidaire par ses extrémités à un diaphragme soumis à des variations de pression. La déformation du diaphragme entraîne des variations de la fréquence de résonance de la poutre vibrante. On mesure donc les variations de la fréquence de résonance de la poutre pour en déduire la pression.

La fréquence de résonance statique de la poutre non soumise à une contrainte est déterminée lors de sa réalisation. La mesure des variations de cette fréquence lorsque la poutre subit une contrainte peut être effectuée par interférométrie.

L'interféromètre, par exemple selon le document GB 2 185 106, est constitué par l'extrémité de la fibre optique amenant un faisceau lumineux continu monochromatique d'excitation de la poutre et la surface supérieure de la poutre.

Le coefficient de transmission de l'interféromètre dépend de la distance séparant l'extrémité de la fibre et la surface en regard.

Lorsque la transmission est maximum, le faisceau est absorbé par la poutre entraînant un chauffage par effet photothermique de la partie supérieure de la poutre qui se déforme par dilatation. La distance fibre-poutre varie entraînant une diminution du coefficient de transmission et par conséquent une diminution du chauffage qui tend à ramener la poutre à son état initial.

La poutre entre alors en vibration à sa fréquence de résonance entretenue par les variations de coefficient de transmission. On est en présence d'un phénomène d'autoexcitation.

On détecte la modulation du faisceau réfléchi par l'interféromètre pour mesurer la fréquence de résonance qui permet de déduire la déformation de la poutre due à une pression exercée sur le diaphragme.

Cette détection présente des inconvénients. En effet pour avoir un maximum de sensibilité, la distance entre l'extrémité de la fibre optique et la surface supérieure de la poutre doit être fixée précisément à une valeur égale à $\lambda /8$ $(2k+1)$ où k est un nombre entier quelconque et $\lambda$ est la longueur d'onde de la source lumineuse.

Or le réglage de cette distance à la précision requise est très difficile à mettre en oeuvre ; d'autre part, la distance au repos entre l'extrémité de la fibre et la surface supérieure de la poutre dépend de facteurs extérieurs. Par exemple, de fortes variations de température entraînent la variation de cette distance.

Un autre inconvénient de ce type de capteur consiste en sa dépendance en température. En effet, le module d'Young du silicium varie de manière sensible en fonction des variations de température, ce qui affecte la fréquence de résonance de la poutre vibrante et par conséquent fausse les mesures.

Pour pallier cet inconvénient, on effectue simultanément des mesures de température et l'on compense la variation du module d'Young en accord avec une calibration préalable.

Le brevet US 4 972 076 décrit un microcapteur utilisant deux poutres vibrantes. La première solidaire du diaphragme à ses deux extrémités permet la mesure de la pression. La seconde, solidaire du diaphragme par l'une de ses extrémités seulement, l'autre étant libre, n'est sensible qu'aux variations de température, la mesure de son module d'Young permet d'apporter les corrections nécessaires à la mesure de pression.

Les deux poutres sont excitées par un même faisceau lumineux modulé qui a pour effet de chauffer les poutres en accord avec leur fréquence de résonance. Or il s'avère que l'excitation simultanée des deux poutres est délicate à mettre en oeuvre efficacement.

La présente invention a pour but de permettre une mesure de pression compensée en température à l'aide d'un microcapteur plus simple à mettre en oeuvre que les microcapteurs de l'art antérieur.

La présente invention a aussi pour but de fournir un système pour détecter la fréquence de résonance de la poutre comprenant un interféromètre peu sensible aux variations de température, ne nécessitant pas, à la différence des systèmes de l'art antérieur, de traitement de surface difficile à mettre en oeuvre et qui diminue les performances du capteur.

La présente invention concerne donc un microcapteur à poutre vibrante compensé en température comprenant :

- une poutre vibrante possèdant une fréquence de résonance, fonction d'une grandeur physique à mesurer,
- des moyens d'excitation de la poutre vibrante,
- des moyens de mesure de la fréquence de résonance de la poutre,
- des moyens de mesure de l'épaisseur optique de la poutre,
- des moyens pour déduire la température de cette mesure, et
- des moyens de détermination de la grandeur physique à mesurer à partir de la fréquence de résonance et de la température.

Selon un mode de réalisation préféré, les moyens de mesure de l'épaisseur optique de la poutre comprennent:

- des moyens d'illumination de la poutre avec un faisceau lumineux de spectre en longueur d'onde large et de longueur d'onde centrale choisie dans une zone de quasi-transparence du matériau formant la poutre,
- un spectroscope pour mesurer le spectre en longueur d'onde du faisceau lumineux réfléchi par la poutre, et
- des moyens pour déduire l'épaisseur optique d'une caractérisation d'une modulation du spectre en longueur d'onde, la poutre étant un interféromètre pour le faisceau lumineux.

Avantageusement le spectroscope comprend un réseau de diffraction et une barrette de capteurs optiques.

De manière avantageuse, les moyens d'illumination comprennent une diode électroluminescente raccordée à une fibre optique dirigeant le faisceau lumineux issu de la diode vers la poutre.

Préférentiellement les moyens d'excitation comprennent une diode laser modulée à la fréquence de résonance de la poutre et délivrant des impulsions lumineuses, une fibre optique dirigeant ces impulsions lumineuses sur la poutre.

Selon un mode de réalisation particulier, le microcapteur comprend :

- un diaphragme, la poutre vibrante étant solidaire par ses extrémités au diaphragme, la fréquence de résonance de la poutre étant une fonction d'une déformation du diaphragme sous l'effet d'une pression,
- des moyens de mesure de la fréquence de résonance comprenant des moyens d'illumination de la poutre avec un faisceau lumineux, un interféromètre constitué par les surfaces en regard de la poutre et du diaphragme, au moins un capteur optique apte à détecter un faisceau lumineux réfléchi par l'interféromètre et à délivrer un signal proportionnel à la fréquence de résonance de la poutre.

De manière préférée, les moyens d'illumination sont communs aux moyens de mesure de la fréquence de résonance et aux moyens de mesure de l'épaisseur optique de la poutre.

Avantageusement, les moyens d'illumination ont un spectre large, des moyens de séparation étant aptes à séparer des composantes à différentes longueurs d'onde d'un faisceau lumineux réfléchi par l'interféromètre, des capteurs optiques étant aptes à détecter des composantes séparées, ces capteurs délivrant un signal proportionnel à la fréquence de résonance de la poutre, des moyens de sélection sélectionnant le signal proportionnel à la fréquence de résonance de plus forte intensité.

Selon un mode de réalisation préféré, les moyens de séparation sont communs aux moyens de mesure de la fréquence de résonance et aux moyens de mesure de l'épaisseur optique de la poutre.

Les caractéristiques et avantages de l'invention apparaitront mieux à la lecture de la description qui suit, donnée à titre purement illustratif et non limitatif en se référant aux dessins annexés sur lesquels :

- la figure 1 représente schématiquement un dispositif conforme à l'invention,
- la figure 2 représente schématiquement une plaque dans laquelle est usinée une poutre vibrante,
- la figure 3 représente schématiquement différents spectres en longueur d'onde provenant d'une simulation du fonctionnement du microcapteur.
- la figure 4 représente schématiquement l'allure des variations d'intensité I d'une composante spectrale avec la distance d séparant la poutre du diaphragme ;
- la figure 5 représente schématiquement une variante de réalisation du dispositif pour une mesure effectuée à plusieurs longueurs d'onde ;
- la figure 6 représente schématiquement l'allure des variations d'intensité I de deux composantes spectrales avec la distance d séparant la poutre du diaphragme.

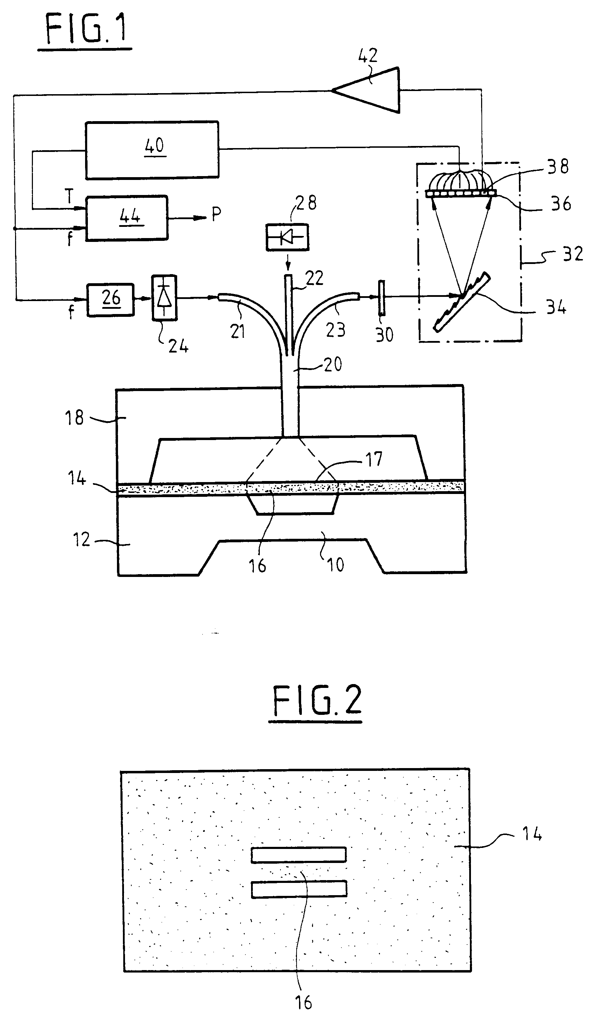

En référence à la figure 1, on décrit maintenant un microcapteur conforme à l'invention. La réalisation particulière est donnée pour une application à la mesure de pression. Mais on sait que la fréquence de résonance peut permettre la détermination d'autres types de contraintes dépendant du moyen choisi pour faire varier la fréquence de résonance de la poutre vibrante.

Le matériau choisi pour réaliser le microcapteur doit être suffisamment stable. On choisit de préférence un cristal parmi le quartz, le saphir, les matériaux semi-conducteurs ou autres.

Dans l'exemple décrit, un diaphragme sensible à la pression 10 est gravé chimiquement dans un substrat rectangulaire 12 en silicium. La forme rectangulaire du diaphragme représenté sur la figure 1 n'est pas limitative et l'on peut aussi choisir une forme circulaire. Une poutre, réalisée par micro-usinage dans une plaque 14 en silicium, est positionnée au centre du diaphragme. Cette poutre 16 est représentée vue de dessus sur la figure 2.

La plaque 14 est solidarisée au substrat 12 par fusion à très haute température, de manière à ce que les extrémités de la poutre 16 soient solidaires du diaphragme. Cette poutre 16 est apte à entrer en vibration de manière résonante.

La fréquence de résonance de la poutre est fonction de ses dimensions et de la température par l'intermédiaire de la dépendance du module d'Young avec la température. De plus, la poutre étant solidaire du diaphragme à ses extrémités, sa fréquence de résonance est fonction de la tension exercée, par conséquent de la flexion du diaphragme et donc de la pression à laquelle le diaphragme est soumis. La poutre est soumise à une excitation optique qui agit par chauffage alternatif (effet photothermique) à la fréquence de résonance.

A cet effet, un capot 18 est fixé sur la plaque 14. Ce capot 18 est percé d'un orifice permettant le passage et le maintien d'une fibre optique 20 dont l'extrémité est en regard de la poutre 16.

Le capot 18 consiste en un substrat en silicium rectangulaire aux dimensions du substrat 12 dans lequel est réalisé le diaphragme 10. Pour former le capot, le substrat est creusé par gravure chimique. La profondeur de la gravure est choisie de manière à éloigner suffisamment l'extrémité de la fibre optique 20 de la poutre 16, comme on le verra plus en détail, par la suite. L'épaisseur du matériau subsistant après la gravure doit être suffisante pour exercer une fonction de maintien de la fibre.

Le capot est percé, à l'aide d'une technique adaptée par exemple chimiquement ou par ultrason ou encore par laser, d'un canal dans lequel la fibre optique 20 est scellée.

Le capot est scellé par ses bords sur la plaque 14.

Dans l'exemple de réalisation représenté sur la figure 1, la fibre optique 20 possède une extrémité en trident présentant donc trois branches 21, 22, 23.

La branche 21 est utilisée pour l'introduction d'un faisceau lumineux d'excitation dans la fibre 20. Ce faisceau lumineux d'excitation est constitué d'impulsions émises par une diode laser 24 à une fréquence égale à la fréquence de résonance de la poutre 16. La longueur d'onde du faisceau d'excitation est choisie dans la bande d'absorption du matériau formant la poutre, par exemple 630 nm ou 670 nm pour du silicium.

Un modulateur 26, connecté à la diode laser 24, commande la délivrance des impulsions lumineuses.

Les impulsions lumineuses sont dirigées sur la poutre 16 par la fibre optique 20. L'absorption de la lumière d'excitation s'effectue principalement au niveau de la surface supérieure 17 de la poutre 16. De cette manière, un gradient de température apparait dans la poutre entre la surface supérieure 17 et la surface inférieure engendrant un gradient de contrainte dans la poutre. La nature impulsionnelle de la lumière entraîne une modulation temporelle du gradient de température, ce qui a pour effet de mettre la poutre 16 en vibration.

La fréquence de résonance évoluant avec la pression exercée sur le diaphragme 10, le microcapteur comprend des moyens de mesure de la fréquence de résonance reliés en sortie à une entrée du modulateur 26 de manière à former une boucle de réaction et à permettre l'entretien de la vibration de la poutre 16.

La pression exercée sur le diaphragme est déterminée par la connaissance de la fréquence de résonance mais cette dernière dépend aussi de la température. Le microcapteur comprend des moyens de mesure de la température permettant d'effectuer une compensation dans la détermination de la pression.

Ce sont les moyens de mesure de la température et de la fréquence de résonance que l'on va décrire maintenant.

Les moyens de mesure de la température comprennent des moyens de mesure de l'épaisseur optique de la poutre 16. Une diode électroluminescente 28 à spectre en longueur d'onde large, allant par exemple de 800 nm à 900 nm, délivre un faisceau lumineux de longueur d'onde centrale choisie dans une zone de quasi-transparence du matériau formant la poutre 16.

Autrement dit la longueur d'onde est choisie telle que le faisceau lumineux soit transmis au travers de la poutre 16 à plus d'un certain pourcentage. Par exemple, on choisit une longueur d'onde de 850 nm qui se situe sur un bord de la bande d'absorption du silicium, mais le faisceau lumineux est transmis à plus de 50% car l'épaisseur de la poutre 16 ne fait que quelques micromètres.

Le faisceau luimineux à spectre large est délivré à l'entrée de la branche 22 de la fibre optique 20 et illumine la poutre 16 en sortie de cette fibre 20.

La poutre 16 constitue un interféromètre pour le faisceau lumineux à spectre large. Le faisceau réfléchi par la poutre 16 a donc son spectre modulé en fonction de l'épaisseur optique de la poutre 16. L'épaisseur optique est égale au produit de l'épaisseur géométrique par l'indice de réfraction du matériau formant la poutre 16. Si l'épaisseur géométrique varie peu (de l'ordre de $10^{-6}$ en valeur relative) en fonction de la température dans le domaine de température étudié n'excédant pas 600°C, l'indice de réfraction varie beaucoup (de l'ordre de $10^{-4}$ en valeur relative, selon la longueur d'onde d'analyse choisie) en fonction de la température. La mesure de la modulation du spectre permet donc de mesurer la température, les variations de l'indice en fonction de la température étant déterminées par une caractérisation préalable.

Le faisceau lumineux à spectre large réfléchi par la poutre pénètre dans la fibre optique 20 et ressort en particulier par l'extrémité de la branche 23 de cette fibre.

Un filtre 30 permet d'éliminer le faisceau réfléchi provenant de la réflexion du faisceau d'excitation tout en n'altérant pas la transmission du faisceau réfléchi à spectre large. Ce dernier est introduit dans un spectroscope 32 comprenant un réseau de diffraction 34 qui dévie les composantes en longueur d'onde du faisceau suivant des angles différents pour former un faisceau étalé. Une barrette de capteurs optiques 36 détecte le faisceau étalé. Chaque capteur correspondant à une longueur d'onde particulière délivré en sortie un signal correspondant à l'intensité lumineuse détectée.

Des moyens de traitement 40 reliés en entrée aux sorties des capteurs 36 réalisent une analyse du spectre en longueur d'onde. Ils calculent l'épaisseur optique à partir des paramètres de la modulation et en déduisent la température, la dépendance en température de l'épaisseur optique ayant été caractérisée et mémorisée préalablement.

Ces moyens de traitement 40 peuvent être constitués par un microprocesseur (connecté à ses périphériques usuels) programmé de manière à obtenir le résultat recherché.

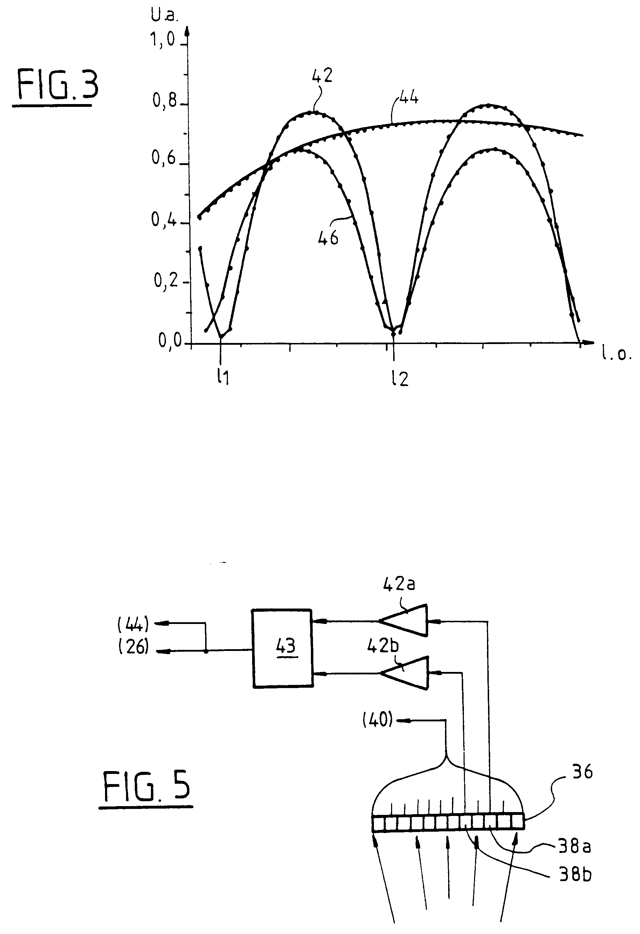

Sur la figure 3, on a représenté schématiquement différents spectres provenant d'une simulation du fonctionnement du dispositif. L'axe des abscisses correspond aux longueurs d'onde (l.o.) ; l'axe des ordonnées correspond aux intensités mesurées par les capteurs de la barrette représentées en unité arbitraire (u.a.).

La courbe 46 représente l'allure du spectre mesuré par le système de traitement. Cette courbe résulte de la combinaison de plusieurs composantes provenant de l'action des différents interféromètres intervenant dans le dispositif.

On compte en fait trois interféromètres distincts qui interagissent avec le faisceau lumineux à spectre large.

Sur la figure 1, on voit que le premier est constitué par la surface de l'extrémité de la fibre optique 20 et la surface supérieure en regard de la poutre 16 ; le second est constitué par la poutre 16 elle-même ; et le troisième par la surface inférieure de la poutre et la surface en regard du diaphragme 10.

De nouveau sur la figure 3, la courbe 42 représente l'allure de la modulation du spectre sous l'action de l'interféromètre constitué par la poutre 16. Il est bien connu que l'épaisseur optique peut être obtenue par la formule :

$$E = 1/2 \; l^2/ \, (l_2 - l_1) \quad (1)$$

où $l_1$ et $l_2$ correspondent à deux minima d'intensité successifs, $l$ correspond à une valeur moyenne entre $l_1$ et $l_2$ et E correspond à l'épaisseur optique. La dépendance en température de E étant connue, on peut déterminer ainsi la température.

La courbe 44 représente l'allure de la modulation du spectre sous l'action de l'interféromètre constitué entre la surface inférieure de la poutre 16 et de la surface en regard du diaphragme 10 (figure 1).

La distance optique entre la poutre 16 et le diaphragme 10 est choisie suffisamment inférieure à l'épaisseur optique de la poutre 16 pour que les périodes de modulation soient différentes et ne se confondent pas. Dans l'exemple représenté sur la figure 3, les distances géométriques sont sensiblement les mêmes, la différence entre les distances optiques étant obtenue grâce à la différence d'indice de réfraction du matériau formant la poutre et l'air emplissant l'espace entre la poutre et le diaphragme. La connaissance des contributions individuelles des interféromètres permet d'effectuer une correction automatique de la mesure d'épaisseur optique et d'éviter une perturbation due à l'interféromètre constitué entre la poutre et le diaphragme.

La contribution du troisième interféromètre constitué entre l'extrémité de la fibre et la poutre n'est pas représentée sur la figure 3. En effet celle-ci n'intervient pas. La distance entre l'extrémité de la fibre et la surface en regard de la poutre est choisie suffisamment grande pour la période de modulation du spectre soit très inférieure à celle de la constribution due à la poutre. Les dimensions des capteurs optiques ne permettent pas de détecter une telle modulation qui ne perturbe donc pas la mesure.

Selon une première variante de réalisation, représentée schématiquement sur la figure 1, les moyens de mesure de la fréquence de résonance comprennent des moyens d'illumination de la poutre 16 constitués par la diode électroluminescente 28 délivrant un faisceau à spectre large à l'entrée de la branche 22 de la fibre 20. En sortie de la fibre 20, le faisceau illumine la poutre 16 et pénètre dans l'interféromètre constitué par les surfaces en regard de la poutre 16 et du diaphragme 10.

Le faisceau réfléchi par cet interféromètre est donc, comme on l'a vu précédemment dirigé en sortie de la branche 23 de la fibre 20 vers le spectromètre 32.

La barrette de capteurs 36 détecte le faisceau étalé par le réseau 34. Mais on ne s'intéresse maintenant qu'aux variations temporelles du faisceau et non à son étalement spectral. A cet effet, un capteur optique 38 de la barrette 36 délivre un signal proportionnel aux variations temporelles de la composante détectée. Un capteur optique du type de ceux compris dans une barrette fabriquée par la société UDT sous la référence OSI 38 AUC est sensible à des fréquences pouvant aller jusqu'à 1 MHz, ce qui est suffisant pour mesurer la fréquence de résonance de la poutre qui se situe aux alentours de 100 kHz.

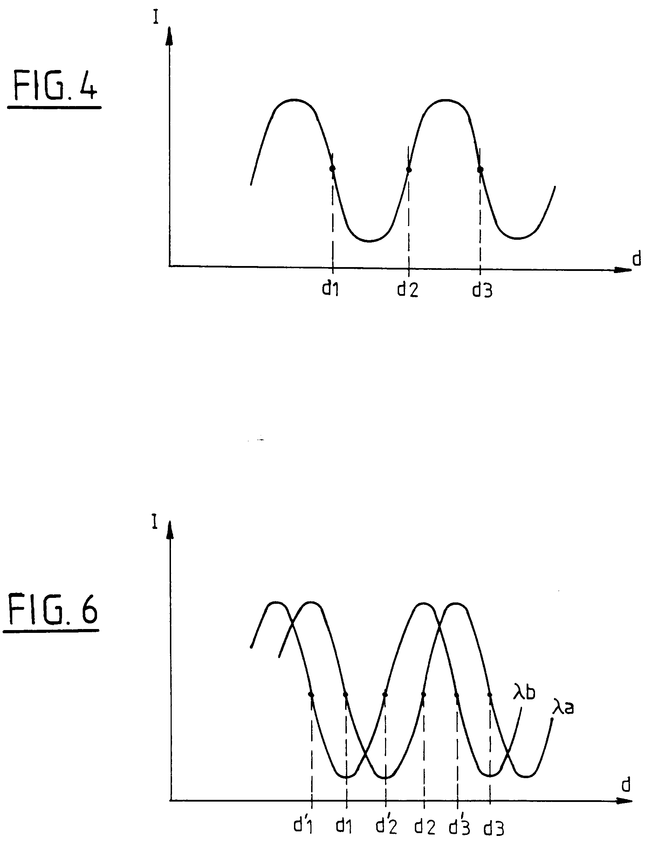

La figure 4 représente schématiquement l'allure des variations d'intensité I d'une composante spectrale avec la distance d séparant la poutre du diaphragme.

Cette distance d est modulée en accord avec les déformations périodiques de la poutre dues au chauffage par les impulsions lumineuses d'excitation.

Cette modulation s'effectue à la fréquence de résonance f de la poutre.

Pour avoir un maximum de sensibilité, la distance d au repos doit être choisie telle qu'un déphasage introduit par le parcours de deux fois la distance d soit égal un multiple impair de $\pi/2$, c'est-à-dire que les variations de d, suite au chauffage, doivent avoir lieu autour d'un des points d1, d2 ou d3 sur la figure 4.

A nouveau sur la figure 1, on voit que le capteur 38 est connecté à un amplificateur 42. L'amplificateur 42 délivre un signal amplifié et mis en forme proportionnel à la fréquence de résonance f de la poutre à l'entrée du modulateur 26 et d'autre part à l'entrée de moyens de calibration 44.

Une autre entrée des moyens de calibration 44 est connectée à une sortie du microprocesseur 40 délivrant un signal correspondant à la température. Ces moyens de calibration 44 permettent de déduire la pression exercée sur le diaphragme à partir de la température et de la fréquence de résonance de la poutre. Les moyens de calibration 44 peuvent par exemple comprendre des tableaux de correspondance conservés en mémoire et qui font correspondre une pression à un couple température-pression suivant les résultats d'une calibration préalable.

La mesure de la fréquence de résonance à l'aide d'une composante spectrale unique présente l'inconvénient de ne pas avoir la même sensibilité à toute température. En effet, le maximum de sensibilité obtenu autour de dl (figure 4) n'est valable que pour une certaine gamme de température ; quand cette dernière varie de manière conséquente, la distance séparant la poutre du diaphragme peut évoluer de manière telle que les variations de distance à la fréquence de résonance s'effectuent autour d'un maximum ou d'un minimum de la courbe d'intensité, c'est-à-dire où la sensibilité est minimum. A cette perturbation s'ajoute un effet de pression. Les courbures du diaphragme et de la poutre sont différentes lorsqu'une pression est appliquée sur le diaphragme entraînant une différence de chemin optique perturbant la mesure.

La variante de réalisation représentée sur la figure 5 montre un dispositif pour lequel la mesure de fréquence de résonance est effectuée à partir de deux composantes spectrales grâce aux signaux délivrés par deux capteurs optiques 38a et 38b de la barrette 36.

De manière avantageuse, ces capteurs sont disposés de manière à détecter des composantes spectrales ayant des longueurs d'onde λa et λb choisies telles qu'un extremum d'intensité (minimum de sensibilité) pour l'une corresponde au point d'inflexion de la courbe d'intensité (maximum de sensibilité : points d1,d2,d3, d'1,d'2,d'3) pour l'autre (figure 6).

Les capteurs 38a et 38b sont respectivement connectés à des amplificateurs 42a et 42b délivrant chacun un signal correspondant à la fréquence de résonance sur deux entrées de moyens de sélection 43 qui sélectionnent le signal de plus forte intensité. Ces moyens de sélection sont connectés en sortie au modulateur 26 et aux moyens de calibration 44.

On comprend que le nombre de capteurs de la barrette 36 utilisé pour la mesure de la fréquence de résonance n'est pas limité à deux. Ainsi, tous les capteurs peuvent être connectés d'une part au microprocesseur 40 pour la mesure de température par analyse spectrale, et d'autre part à des amplificateurs reliés à des moyens de sélection comprenant par exemple un multiplexeur et un système comparateur pour sélectionner le signal de plus forte intensité.

## Revendications

1. Microcapteur à poutre vibrante compensé en température caractérisé en ce qu'il comprend :
   une poutre vibrante (16) possédant une fréquence de résonance (f), fonction d'une grandeur physique à mesurer,
   des moyens d'excitation (24,26) de la poutre vibrante (16),
   des moyens de mesure (28,32,42) de la fréquence de résonance (f) de la poutre (16),
   des moyens de mesure (28,32) de l'épaisseur optique de la poutre (16),
   des moyens (40) pour déduire la température de cette mesure, et
   des moyens (44) de détermination de la grandeur physique à partir de la fréquence de résonance et de la température.

2. Microcapteur selon la revendication 1, caractérisé en ce que les moyens de mesure de l'épaisseur optique de la poutre (16) comprennent :
   des moyens d'illumination (28,20) de la poutre (16) avec un faisceau lumineux de spectre en longueur d'onde large et de longueur d'onde centrale choisie dans une zone de quasi-transparence du matériau formant la poutre (16), un spectroscope (32) pour mesurer le spectre en longueur d'onde du faisceau lumineux réfléchi par la poutre (16), et
   des moyens (40) pour déduire l'épaisseur optique d'une caractérisation d'une modulation du spectre en longueur d'onde, la poutre étant un interféromètre pour le faisceau lumineux.

3. Microcapteur selon la revendication 2 caractérisé en ce que le spectroscope (32) comprend un réseau de diffraction (36) et une barrette de capteurs optiques (36).

4. Microcapteur selon la revendication 2 caractérisé en ce que les moyens d'illumination comprennent une diode électroluminescente (28) raccordée à une fibre optique (20) dirigeant le faisceau lumineux issu de la diode vers la poutre.

5. Microcapteur selon la revendication 1 caractérisé en ce que les moyens d'excitation comprennent une diode laser (24) modulée à la fréquence de résonance de la poutre (16) et délivrant des impulsions lumineuses, une fibre optique (20) dirigeant ces impulsions lumineuses sur la poutre.

**6.** Microcapteur selon la revendication 1 caractérisé en ce qu'il comprend :

un diaphragme (10), la poutre vibrante (16) étant solidaire par ses extrémités au diaphragme (10), la fréquence de résonance de la poutre (16) étant une fonction d'une déformation du diaphragme (10) sous l'effet d'une pression,

les moyens de mesure de la fréquence de résonance comprenant des moyens d'illumination (28,20) de la poutre (16) avec un faisceau lumineux,

un interféromètre constitué par les surfaces en regard de la poutre (16) et du diaphragme (10), au moins un capteur optique (38) apte à détecter un faisceau lumineux réfléchi par l'interféromètre et à délivrer un signal proportionnel à la fréquence de résonance de la poutre (16).

**7.** Microcapteur selon la revendication 6 caractérisé en ce que les moyens d'illumination sont communs aux moyens de mesure de la fréquence de résonance et aux moyens de mesure de l'épaisseur optique de la poutre.

**8.** Microcapteur selon la revendication 6 caractérisé en ce que les moyens d'illumination ont un spectre en longueur d'onde large, et en ce qu'il comprend :

des moyens de séparation (34) aptes à séparer des composantes à différentes longueurs d'onde d'un faisceau lumineux réfléchi par l'interféromètre,

des capteurs optiques (38a,38b) disposés de manière à détecter des composantes séparées, ces capteurs délivrant un signal proportionnel à la fréquence de résonance de la poutre, et

des moyens de sélection (43) sélectionnant le signal proportionnel à la fréquence de résonance de plus forte intensité.

**9.** Microcapteur selon la revendication 8 caractérisé en ce que les moyens de séparation (34) sont communs aux moyens de mesure de la fréquence de résonance et aux moyens de mesure de l'épaisseur optique de la poutre.

**Patentansprüche**

**1.** Temperaturkompensierter Mikrosensor mit vibrierendem Stab, dadurch gekennzeichnet, daß er umfaßt:

einen vibrierenden Stab (16), der eine Resonanzfrequenz (f) besitzt, welche eine Funktion einer zu messenden physikalischen Größe ist,

Erregungsmittel (24,26) für den vibrierenden Stab (16), Meßmittel (28,32,42) der Resonanzfrequenz (f) des Stabes (16), Meßmittel (28,32) der optischen Dicke des Stabes (16),

Mittel (40) zum Ableiten der Temperatur aus dieser Messung, und

Mittel (44) zum Bestimmen der physikalischen Größe, ausgehend von der Resonanzfrequenz und der Temperatur.

**2.** Mikrosensor nach Anspruch 1, dadurch gekennzeichnet, daß die Mittel zum Messen der optischen Dicke des Stabes (16) umfassen:

Beleuchtungsmittel (28,20) des Stabes (16) mit einem Lichtstrahl des Spektrums im langwelligen Bereich und der zentralen Wellenlänge, ausgewählt in einer Zone der Quasi-Transparenz des den Stab (16) bildenden Materials,

ein Spektroskop (32) zum Messen des Spektrums in der Wellenlänge des Lichtstrahls, der von dem Stab (16) reflektiert wird, und

Mittel (40) zum Ableiten der optischen Dicke aus einer Charakterisierung einer Modulation des Spektrums in der Wellenlänge, wobei der Stab ein Interferometer für den Lichtstrahl bildet.

**3.** Mikrosensor nach Anspruch 2, dadurch gekennzeichnet, daß das Spektroskop (32) ein Diffraktionsgitter (36) und eine Leiste optischer Sensoren (36) umfaßt.

**4.** Mikrosensor nach Anspruch 2, dadurch gekennzeichnet, daß die Beleuchtungsmittel eine elektrolumineszente Diode (28) umfassen, angeschlossen an eine optische Faser (20), die den von der Diode ausgehenden Lichtstrahl auf den Stab richtet.

**5.** Mikrosensor nach Anspruch 1, dadurch gekennzeichnet, daß die Erregungsmittel eine Laserdiode (24) umfassen, moduliert mit der Resonanzfrequenz des Stabes (16) und Lichtimpulse abgebend, wobei eine optische Faser (20) diese Lichtimpulse auf den Stab richtet.

**6.** Mikrosensor nach Anspruch 1, dadurch gekennzeichnet, daß er umfaßt:

eine Membran (10), wobei der vibrierende Stab (16) mit seinen Enden an der Membran (10) befestigt ist, wobei die Resonanzfrequenz des Stabes (16) eine Funktion einer Deformation der Membran (10) unter der Wirkung eines Druckes ist,

wobei die Resonanzfrequenz-Meßmittel Mittel zum Beleuchten (28,20) des Stabes (16) mit einem Lichtstrahl umfassen,

ein Interferometer, gebildet von den einander gegenüberliegenden Oberflächen des Stabes (16) und der Membran (10),

mindestens einen optischen Sensor (38), ausgebildet zum Erfassen eines von dem Interferometer reflektierten Lichtstrahls und zum Erzeugen eines Signals, proportional der Resonanzfrequenz des Stabes (16).

7. Mikrosensor nach Anspruch 6, dadurch gekennzeichnet, daß die Beleuchtungsmittel den Resonanzfrequenz-Meßmitteln und den Mitteln zum Messen der optischen Dicke des Stabes gemeinsam sind.

8. Mikrosensor nach Anspruch 6, dadurch gekennzeichnet, daß die Beleuchtungsmittel ein Spektrum in großen Wellenlängen haben und daß sie umfassen:

Mittel zum Trennen (34), ausgebildet zum Trennen der Komponenten bei unterschiedlichen Wellenlängen eines von dem Interferometer reflektierten Lichtstrahls,

optische Sensoren (38a,38b), die derart angeordnet sind, daß sie die getrennten Komponenten erfassen, welche Sensoren ein Signal erzeugen, proportional der Resonanzfrequenz des Stabes, und

Auswählmittel (43), die das Signal proportional der Resonanzfrequenz mit größter Intensität auswählen.

9. Mikrosensor nach Anspruch 8, dadurch gekennzeichnet, daß die Mittel zum Trennen (34) den Resonanzfrequenz-Meßmitteln und den Mitteln zum Messen der optischen Dicke des Stabes gemeinsam sind.

**Claims**

1. Microsensor with a temperature-compensated vibratory bar, characterised in that it comprises:
a vibratory bar (16) having a resonant frequency (f) which is a function of a physical quantity to be measured,
means (24, 26) for exciting the vibratory bar (16),
means (28, 32, 42) for measuring the resonant frequency (f) of the bar (16),
means (28, 32) for measuring the optical thickness of the bar (16),
means (40) for deriving the temperature from this measurement, and
means (44) for determining the physical quantity from the resonant frequency and temperature.

2. Microsensor according to Claim 1, characterised in that the means for measuring the optical thickness of the bar (16) comprise:
means (28, 20) for illuminating the bar (16) with a light beam with a broad wavelength spectrum and a centre wavelength chosen in an area of quasi-transparency of the material forming the bar (16),
a spectroscope (32) for measuring the wavelength spectrum of the light beam reflected by the bar (16), and
means (40) for deriving the optical thickness from a characterisation of a wavelength spectrum modulation, the bar being an interferometer for the light beam.

3. Microsensor according to Claim 2, characterised in that the spectroscope (32) comprises a diffraction grating (36) and an array of optical sensors (36).

4. Microsensor according to Claim 2, characterised in that the illumination means comprise a light-emitting diode (28) connected to an optical fibre (20) directing the light beam coming from the diode to the bar.

5. Microsensor according to Claim 1, characterised in that the excitation means comprise a laser diode (24) modulated at the resonant frequency of the bar (16) and delivering light pulses, an optical fibre (20) directing these light pulses onto the bar.

6. Microsensor according to Claim 1, characterised in that it comprises:
a diaphragm (10), the vibratory bar (16) being fixed by its ends to the diaphragm (10), the resonant frequency of the bar (16) being a function of a deformation of the diaphragm (10) under the effect of a pressure,
the means for measuring the resonant frequency, comprising means (28, 20) for illuminating the bar (16) with a light beam,
an interferometer formed by the facing surfaces of the bar (16) and diaphragm (10),
at least one optical sensor (38) suitable for detecting a light beam reflected by the interferometer and for delivering a signal proportional to the resonant frequency of the bar (16).

7. Microsensor according to Claim 6, characterised in that the illumination means are common to the means for measuring the resonant frequency and to the means for measuring the optical thickness of the bar.

8. Microsensor according to Claim 6, characterised in that the illumination means have a broad wavelength spectrum, and in that it comprises:
separation means (34) suitable for separating components with different wavelengths of a light beam reflected by the interferometer,
optical sensors (38a, 38b) disposed so as to detect separate components, these sensors delivering a signal proportional to the resonant frequency of the bar, and

selection means (43) selecting the signal proportional to the resonant frequency of the greatest intensity.

9. Microsensor according to Claim 8, characterised in that the separation means (34) are common to the means for measuring the resonant frequency and to the means for measuring the optical thickness of the bar.

# FIG.1

# FIG.2

10

FIG.3

FIG. 5

FIG.4

FIG.6